Europäisches Patentamt

European Patent Office

Office européen des brevets

(11) Publication number: **0 385 421**
**A2**

## (12) EUROPEAN PATENT APPLICATION

(21) Application number: **90103868.7**

(51) Int. Cl.5: **H04N 1/387**

(22) Date of filing: **28.02.90**

(30) Priority: **02.03.89 JP 50391/89**

(43) Date of publication of application:
**05.09.90 Bulletin 90/36**

(84) Designated Contracting States:
**DE FR GB**

(71) Applicant: **Kabushiki Kaisha Toshiba**
**72, Horikawa-cho Saiwai-ku**
**Kawasaki-shi(JP)**

(72) Inventor: **Yoneda, Hitoshi, c/o Intellectual**
**Property Div.**
**K.K. Toshiba, 1-1 Shibaura 1-chome**
**Minato-ku, Tokyo 105(JP)**
Inventor: **Machida, Hironobu, c/o Intellectual**
**Property Div.**
**K.K. Toshiba, 1-1 Shibaura 1-chome**
**Minato-ku, Tokyo 105(JP)**
Inventor: **Kanno, Hiroki, c/o Intellectual**
**Property Div.**
**K.K. Toshiba, 1-1 Shibaura 1-chome**
**Minato-ku, Tokyo 105(JP)**

(74) Representative: **Henkel, Feiler, Hänzel &**
**Partner**
**Möhlstrasse 37**
**D-8000 München 80(DE)**

(54) Image processing apparatus.

(57) An image processing apparatus includes signal extracting circuits (3, 4) for extracting characteristics respectively corresponding to character and photograph sections from an image signal, a decision circuit (5) for estimating the character or photograph section from the extracted characteristics, a selector circuit (6) for selecting threshold data for binarizing the character and photograph sections in accordance with an estimation result of the estimate circuit, and a binarizing circuit for binarizing of the image signal in accordance with the selected threshold data.

F I G. 1

## Image processing apparatus

The present invention relates to an image processing apparatus for processing a document image including characters and a photograph.

In image processing apparatuses such as a document image processor capable of processing image information in addition to code information, image information with contrast (e.g., characters and graphical patterns) included in image information read by a scanner or the like is binary-quantized by a constant threshold. Image information having tone (e.g., a photograph) is binary converted by a half-tone method such as a dither method. When read image information is simply binary-converted by the constant threshold, picture quality of an area of character and graphical patterns or graphics is not deteriorated because resolution in this area is preserved, whereas the gradation of an area of a photograph is not preserved and its image quality is deteriorated. On the other hand, when the read image information is simply subjected to gradation processing by an ordered dither method, the image quality of the area of the photograph is not deteriorated because gradation in this area is preserved, whereas the image quality of the area of character and graphical patterns is deteriorated because resolution in this area is deteriorated.

When binary conversion of the read image information is performed by a single binary quantization method, it is impossible to obtain an image which satisfies image quality in both the area of the character and graphical patterns and the area of the photograph. In this manner, when an image information is not binary-converted in accordance with types of image, problems are posed in various image processing. For example, when processing suitable for characteristics of an image is not performed, image quality is deteriorated in an enlargement/reduction process of the binary image. When an image is not encoded by a data compression method which is suitable for the characteristics of the image, this encoding results in inefficient data compression. In document image processing, image information, therefore, must be divided into areas in accordance with different characteristics of images, and adaptive processing of each area is inevitably required.

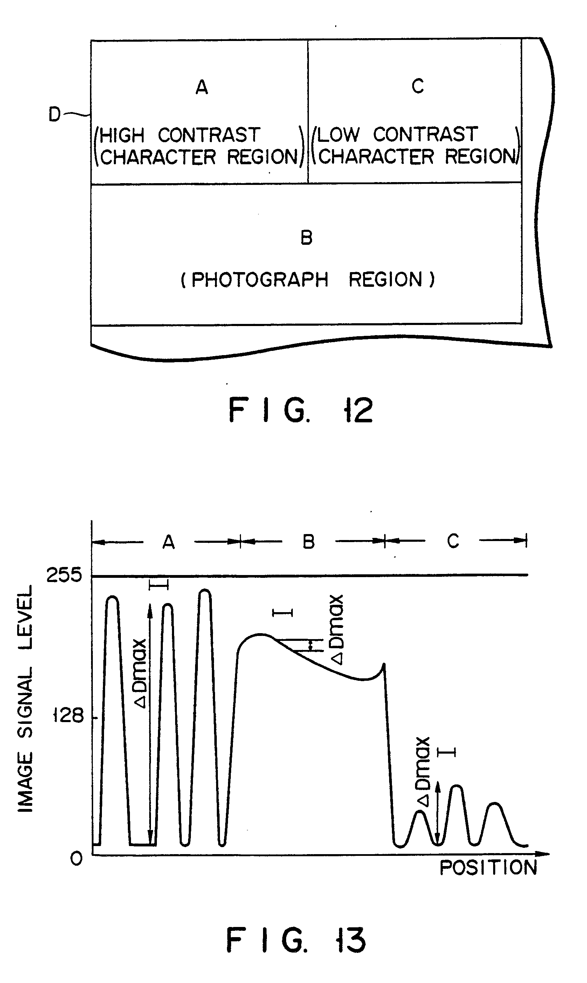

A document image including three different types of image area is deemed to be processed in the field of OA (Office Automation). For example, as shown in Fig. 12, it is assumed necessary to process a document D having an area of character and graphical patterns with contrast (to be referred to as a high contrast character section hereinafter), i.e., a section A, a photographic area having a moderate density gradient (to be referred to as a photograph section hereinafter), i.e., a section B, and an area of thin characters (to be referred to as a low contrast character section hereinafter), i.e., a section C. Typical image signal levels obtained by reading the document D having the sections A, B, and C are shown in Fig. 13. That is, a difference between the maximum and minimum image signal levels is large in the high contrast character section A, a difference in the photograph section B is small, and an image signal level in the low contrast character section C falls within the range between the image signal levels of the sections A and B. Note that the high and low contrast character sections are represented by a character section.

The following method is proposed as a method of separating the above three image sections and simultaneously preserving the resolution and gradation. That is, a maximum density difference "$\Delta Dmax/Da$" normalized by a mean density obtained by a maximum density difference $\Delta Dmax$ and a mean density $Da$ of an image density in a local section within the image plane is obtained. This calculated value is compared with an estimating threshold value to separate an image into a character section and a photograph section, and the binary quantization methods are switched in accordance with the characteristics of the image sections. Note that the "density" represents a signal level of an image read by a scanner and is different from the general "optical density". The term "density" is used as the image signal level below, unless otherwise specified.

When discrimination precision of the low contrast character section is improved in the above conventional method, an estimation error rate of the photograph section is increased. However, when discrimination precision of the photograph section is improved, an estimation error rate of the low contrast character section is increased. This is presumed to be attributed to the fact that a correlation between the maximum density difference and the mean density exhibits complex distributions in the character and photograph sections. More specifically, since the relation between the maximum density and the mean density has a wide two-dimensional distribution, it is difficult to two-dimensionally separate the sections with high precision by a method (discrimination by normalized characteristics) of simply separating the area into sections by lines on a two-dimensional plane.

The conventional method cannot accurately separate an image including of the high contrast character section A, the photograph section B, and the low contrast character section C into picture sections, and cannot simultaneously satisfy the requirements with respect to the resolution of the character section and the gradation of the photograph section. That is, adaptive processing cannot be performed in accordance with the image characteristics in units of sections.

It is an object of the present invention to provide an image processing apparatus capable of separating image information into sections corresponding to the characteristics of images with high precision and binary converting the image information of each section in accordance with the corresponding image characteristics, and capable of improving processing efficiency in each image processing.

According to the present invention, there is provided an image processing apparatus comprising a plurality of characteristic extracting circuits for extracting a plurality of characteristics from an image information signal, a decision circuit for estimating characteristics of the image information signal with reference to estimate data prepared in correspondence with characteristics of the image in accordance with the characteristics extracted by the plurality of characteristic extracting circuits, a first threshold generating circuit for generating a first threshold signal for binarizing the image information signal, a second threshold generating circuit for generating a second threshold signal for binarizing the image information signal, a selector circuit for selecting either the first or second threshold signal generated by either the first or second threshold generating circuit, and a binarizing circuit for binarizing the image information signal by using the first or second threshold signal selected by the selector circuit as a threshold signal.

According to the present invention, the estimate information are prepared from various pieces of document image information on the basis of statistical values of a plurality of characteristics, and the plurality of characteristics are extracted from the obtained image information signal. The extracted characteristics are supplied to the estimate circuit, and the decision circuit outputs an estimate signal corresponding to the image characteristics. The first or second threshold value is selected on the basis of the estimate signal, and the selected value serves as a threshold value for binarizing the image information signal.

This invention can be more fully understood from the following detailed description when taken in conjunction with the accompanying drawings, in which:

Fig. 1 is a block diagram showing a conceptual arrangement of an image processing apparatus;

Fig. 2 is a detailed functional block diagram of a discrimination circuit;

Fig. 3 is a diagram showing an arrangement of a decision circuit;

Fig. 4 is a view showing dither threshold values;

Fig. 5 is a block diagram of a maximum/minimum detection circuit;

Fig. 6 is a view showing a window for explaining an operation of the maximum/minimum detection circuit;

Fig. 7 is a timing chart for explaining an operation of a maximum/minimum value calculation circuit;

Fig. 8 is a block diagram of a mean value calculation circuit;

Fig. 9 is a timing chart for explaining an operation of the mean value calculation circuit;

Fig. 10 is a graph showing a correlation between a maximum density difference $\Delta Dmax$ and a mean density $Da$ obtained from various pieces of image information;

Fig. 11 is a graph for explaining an estimation error section during discrimination performed using the normalized maximum density difference as a characteristic;

Fig. 12 is a view for explaining document image sections; and

Fig. 13 is a graph for explaining image signal levels of the respective image sections.

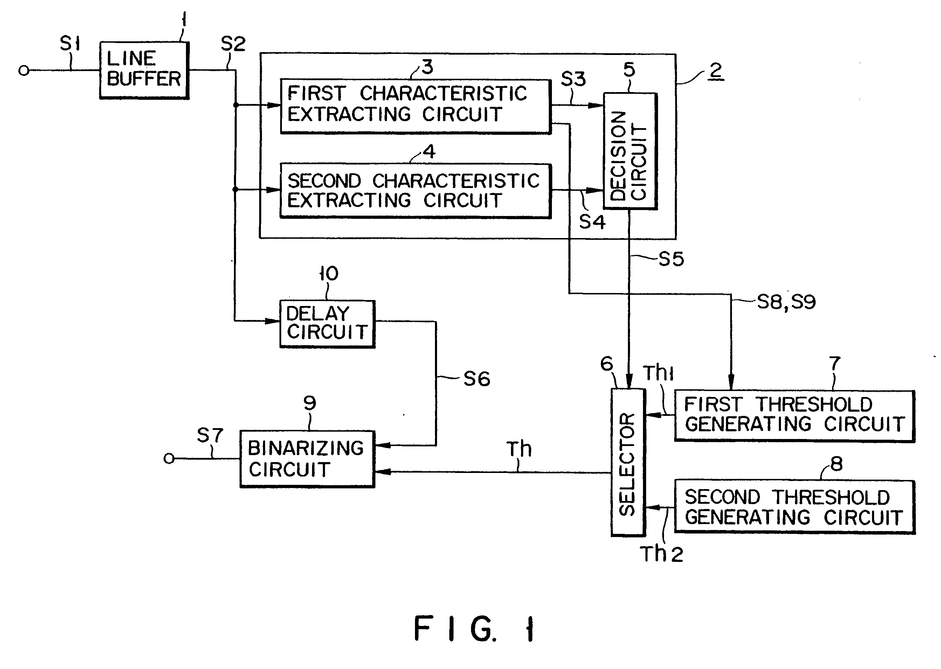

Fig. 1 is a block diagram showing a conceptual arrangement of an image processing apparatus according to the present invention. An image signal S1 (8 bits/pixel) read by a reader or scanner (not shown) is supplied to a line buffer 1. The line buffer 1 temporarily stores the image signal S1. The image signal S1 stored in the line buffer 1 is supplied as image data S2 to a discrimination circuit 2 in synchronism with a clock signal (not shown).

The discrimination circuit 2 comprises a first characteristic extracting circuit 3, a second characteristic extracting circuit 4, and a decision circuit 5. The first characteristic extracting circuit 3 receives the image data S2 as its input and outputs a maximum density difference signal S3 (to be described in detail later) as a first characteristic signal. Similarly, the second characteristic extracting circuit 4 receives the image data S2 as its input and outputs a mean density signal S4 (to be described in detail later) as a second characteristic signal. The decision circuit 5 which receives the maximum density difference signal S3 as the first characteristic signal and the mean density signal S4 as the second characteristic signal estimates that the image data S2 is a character or photograph in units of pixels and outputs a decision signal S5 as an estimation result to a selector 6.

The selector 6 selects a first threshold signal Th1 output from a first threshold generating circuit 7 or a second threshold signal Th2 output from a second threshold generating circuit 8 in accordance with the estimate signal S5 and outputs the selected threshold value to a binary conversion circuit 9 as a threshold value Th for actually binary converting the image data.

The binarization circuit 9 compares the threshold signal Th from the selector circuit 6 with an image signal S6 output from a delay circuit 10 for delaying the image data S2 by a predetermined period of time to estimate whether a pixel of the image signal S6 is a white or black pixel. The binarization circuit 9 outputs the image signal S6 as a binary image signal S7. More specifically, when the signal level of the image signal S6 output from the delay circuit 10 is higher than the threshold signal Th, the binarization circuit 9 outputs a signal "1" (e.g., this signal corresponds to the black pixel). However, when the signal level of the signal S6 is lower than the threshold signal Th, the binarization circuit 9 outputs a signal "0" (e.g., this signal corresponds to a white pixel). The delay circuit 10 comprises, e.g., a delay memory for delaying the image data S2 by a period of time required for determining the binarization threshold value Th as the image data S2 is transmitted through the discrimination circuit 2, the selector 6, the first threshold generating circuit, and the like.

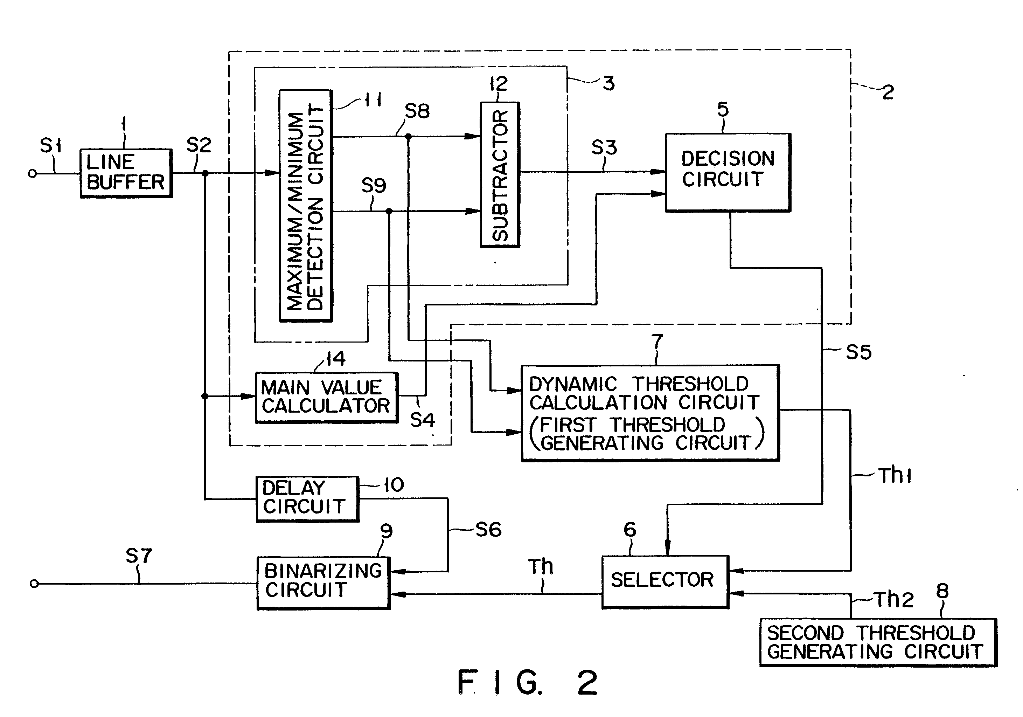

The function of the discrimination circuit 2 will be described with reference to the functional block diagram shown in Fig. 2.

A maximum/minimum value detection circuit 11 included in the first characteristic extracting circuit 3 detects maximum and minimum image densities Dmax and Dmin of image densities within a window (4 × 4 = 16 pixels) including a target pixel in accordance with signal levels and outputs the detection results as a maximum image density signal S8 and a minimum image density signal S9 to a subtractor 12 and the dynamic threshold calculation circuit 7 serving as the first threshold generating circuit (to be described later). The subtractor 12 calculates a maximum density difference $\Delta$Dmax within the window in accordance with the maximum and minimum image density signals S8 and S9 detected by the maximum/minimum detection circuit 11 in accordance with equation (1) below:

$\Delta$Dmax = Dmax - Dmin     (1)

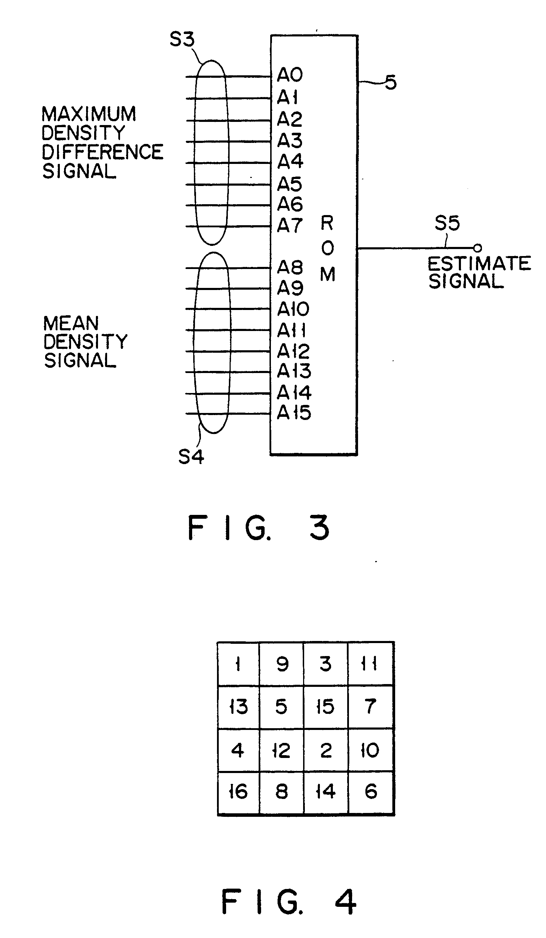

The decision circuit 5 discriminates a character section from a photograph section in accordance with the maximum density difference signal S3 representing the maximum density difference $\Delta$Dmax as the first characteristic and the mean density signal S4 representing the mean density within the window as the second characteristic. As shown in Fig. 3, the decision circuit 5 comprises a 64-Kbit ROM which receives the maximum density difference signal S3 (the first characteristic) and the mean density signal S4 (the second characteristic) as address inputs. The decision circuit 5 estimates whether the input pixel is a character or photograph pixel and outputs the decision signal S5 as a decision result. This decision signal S5 has the following values:

"1" for character pixel "0" for photograph pixel

A binarization method will be described below. The dynamic threshold calculation circuit 7 serving as the first threshold generating circuit calculates a threshold value for processing a given pixel by a dynamic threshold value when the given pixel is decision as a character pixel. A binarization threshold value Bh is determined by equation (2) in accordance with the intrawindow maximum and minimum image density signals S8 and S9 detected by the maximum/minimum value detection circuit 11:

Bh = (Dmax + Dmin)/2     (2)

This binarization threshold value Bh is supplied to the selector 6 as the first threshold signal Th1.

The second threshold generating circuit 8 determines a binarization threshold value for a photograph section and outputs this to the selector 6 as the second threshold signal Th2. A matrix for this threshold value is exemplified by a known 4 × 4 dither threshold matrix, as shown in Fig. 4.

The selector 6 selects the first or second threshold signal Th1 or Th2 in accordance with the value of the decision signal S5 and outputs the selected signal as the threshold signal Th. In this case, the selection by the decision signal S5 is performed as follows:

First threshold signal Th1 is selected if discrimination signal S5 = "1"; and
Second threshold signal Th2 is selected if discrimination signal S5 = "0".

The binarization circuit 9 compares the threshold signal Th thus determined with the image signal S6 delayed by the delay circuit 10 and outputs a binary-converted image signal S7.

The arrangement and operation of the discrimination circuit 2 will be described in more detail.

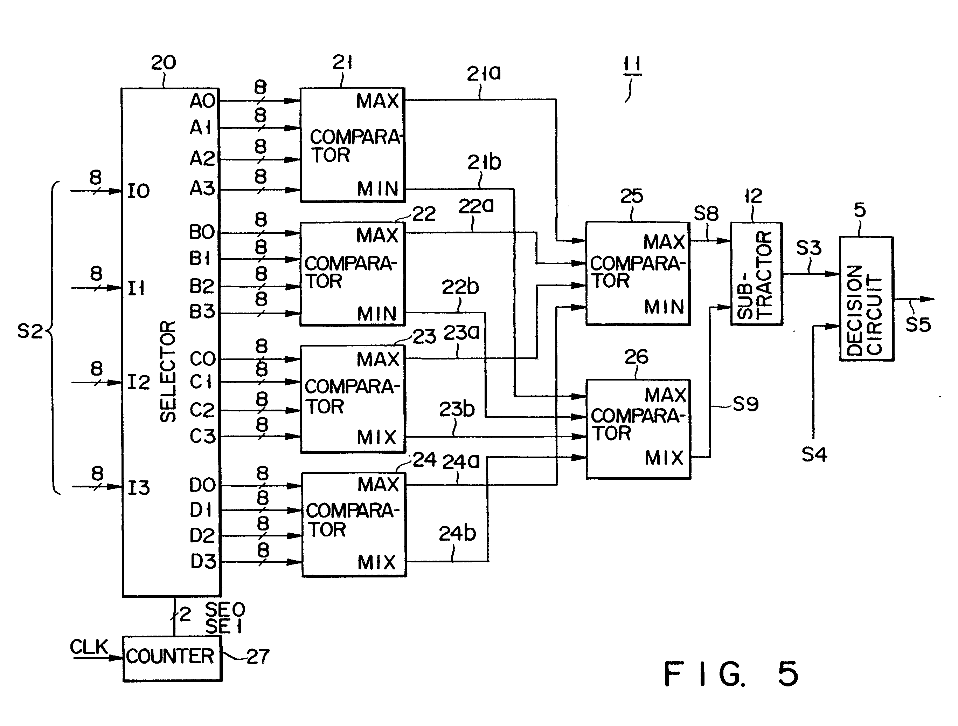

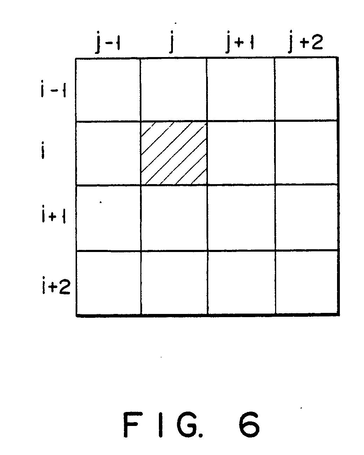

Fig. 5 is a detailed block diagram of the maximum/minimum value detection circuit 11. Referring to Fig. 5, the image data S2 stored in the line buffer 1 are sequentially supplied to comparators 21, 22, 23, and 24 through a selector 20 in synchronism with a clock signal CLK in units of four pixels (8 bits/pixel). For example, in a window having 16 pixels, as shown in Fig. 6, four pixels of the (j-1)th, jth, (j+1)th, and (j+2)th columns are sequentially input to the comparators 21, 22, 23, and 24, respectively.

A counter 27 comprises a 2-bit counter operated in response to the clock signal CLK and generates selection signals SE0 and SE1 for the selector 20. The selector 20 outputs the image data S2 supplied to input ports I3 to I0 to any set of output ports A3 to A0, B3 to B0, C3 to C0, and D3 to D0 in accordance with the selection signals SE1 and SE0 from the counter 27. The comparator 21 detects maximum and minimum densities 21a and 21b of the pixels of the (j-1)th column and supplies them to comparators 25 and 26, respectively. Similarly, the comparator 22 detects maximum and minimum densities 22a and 22b of the pixels of the jth column and supplies them to the comparators 25 and 26, respectively. The comparator 23 detects maximum and minimum densities 23a and 23b of the pixels of the (j+1)th column and supplies them to the comparators 25 and 26, respectively. The comparator 24 detects maximum and minimum densities 24a and 24b of the pixels of the (j+2)th column and supplies them to the comparators 25 and 26, respectively.

The comparator 25 receives the maximum density 21a of the (j-1)th column output from the comparator 21, the maximum density 22a of the jth column output from the comparator 22, the maximum density 23a of the (j+1)th column output from the comparator 23, and the maximum density 24a of the (j+2)th column output from the comparator 24, and detects a maximum density therefrom. The comparator 25 then outputs the maximum image density signal S8. The comparator 26 receives the minimum density 21b of the (j-1)th column output from the comparator 21, the minimum density 22b of the jth column output from the comparator 22, the minimum density 23b of the (j+1)th column output from the comparator 23, and the minimum density 24b of the (j+2)th column output from the comparator 24, and detects a minimum density therefrom. The comparator 26 then outputs the minimum image density signal S9. The maximum and minimum image density signals S8 and S9 are supplied to the subtractor 12.

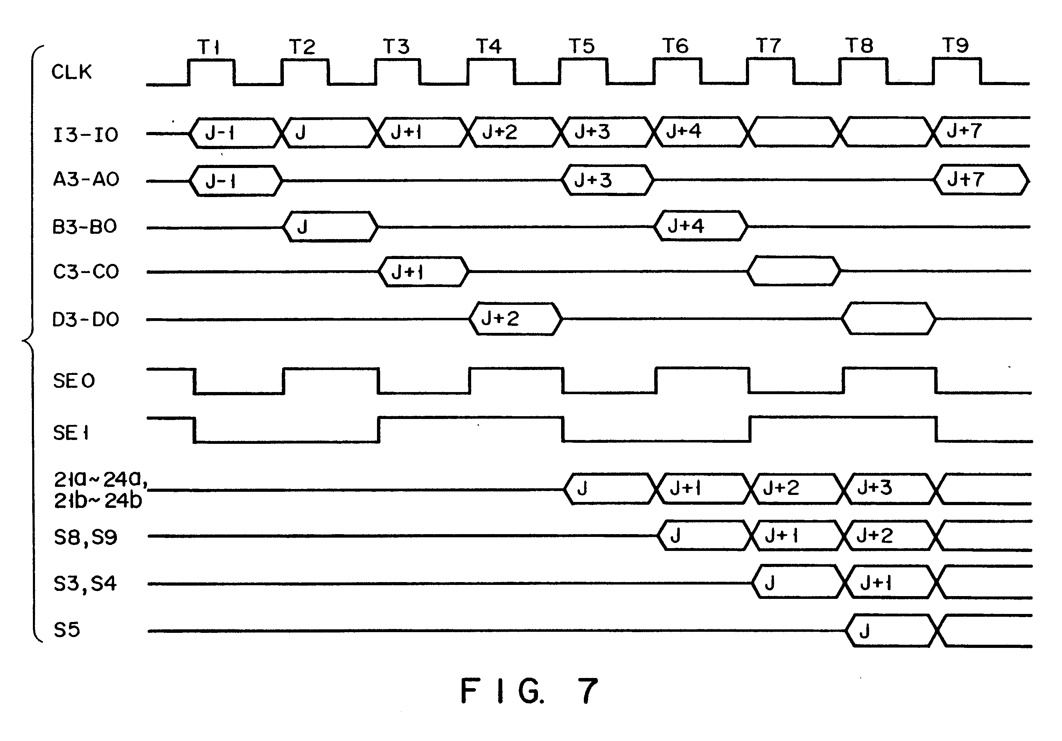

An operation of the maximum/minimum value calculation circuit 11 will be described with reference to a timing chart of Fig. 7.

A target pixel subjected to binary conversion is given by a pixel of the ith row and the jth column indicated by a hatched area. The window comprises 16 pixels of the (i-1)th row to the (i+2)th row and the (j-1)th column to the (j+2)th column.

As shown in Fig. 7, the maximum/minimum value detection circuit 11 is operated in response to the clock signal CLK synchronized with a read clock signal. That is, during a clock pulse T1, the counter 27 is set in the initial state, and a selection signal SE1 = low level (to be referred to as an L level hereinafter) and a selection signal SE0 = L level are obtained to select the output ports A3 to A0. At the same time, data of pixels of the (j-1)th column and the (i-1)th to (i+2)th rows of the window are supplied to inputs I3 to I0 of the selector 20, respectively. The data of the pixel of the (j-1)th column are supplied to the comparator 21, and the comparator 21 outputs the maximum and minimum densities 21a and 21b. During a clock pulse T2, a selection signal SE1 = L level and a selection signal S0 = high level (to be referred to as an H level hereinafter) of the counter 27 are obtained to select the output ports B3 to B0. At the same time, data of pixels of the jth column and the (i-1)th to (i+2)th rows of the window are supplied to inputs I3 to I0 of the selector 20, respectively. The data of pixels of the jth column are supplied to the comparator 22, and the comparator 22 outputs the maximum and minimum densities 22a and 22b. During a clock pulse T3, the selection signal SE1 = H level and the selection signal SE0 = L level are obtained to select the output ports C3 to C0. At the same time, data of pixels of the (j+1)th column and the (i-1)th to (i+2)th rows of the window are supplied to the inputs I3 to I0 of the selector 20, respectively. Data of the pixels of the (j+1)th column are supplied to the comparator 23, and the comparator 23 outputs the maximum and minimum densities 23a and 23b. During a clock pulse T4, the selection signal SE1 = H level and the selection signal SE0 = H level of the counter 27 are obtained to select the output ports D3 to D0. At the same time, data of the pixels of the (j+2)th column and the (i-1)th to (i+2)th rows of the window are supplied to the inputs I3 to I0 of the selector 20. The data of the pixels of the (j+2)th column are supplied to the comparator 24, and the comparator 24 outputs the maximum and minimum densities 24a and 24b. Therefore, the maximum densities 21a, 22a, 23a, and 24a and the minimum densities 21b, 22b, 23b, and 24b of the pixels of the (j-1)th, jth, (j+1)th, (j+2)th columns of the target window are detected and output by the above operations.

During a clock pulse T5, the maximum densities 21a, 22a, 23a, and 24a of the (j-1)th, jth, (j+1)th, and (j+2)th columns are supplied to the comparator 25 and the minimum densities 21b, 22b, 23b, and 24b thereof are supplied to the comparator 26. The comparator 25 detects the maximum image density signal S8 of the window from the maximum densities 21a, 22a, 23a, and 24a of the respective columns, and the comparator 26 detects the minimum image density signal S9 of the window from the minimum densities 21b, 22b, 23b, and 24b of the respective columns. The maximum image density signal S8 detected by the comparator 25 an the minimum image density signal S9 detected by the comparator 26 are input to the subtractor 12. The subtractor 12 calculates and outputs the maximum density difference signal S3.

During a clock pulse T7, the maximum density difference signal S3 is supplied to the decision circuit 5. At the same time, the decision circuit 5 also receives the mean density signal S4 output from the mean value calculation circuit 4 (to be described in detail later). During the next clock pulse T8, the estimation result is output to the selector 6 as the estimate signal S5.

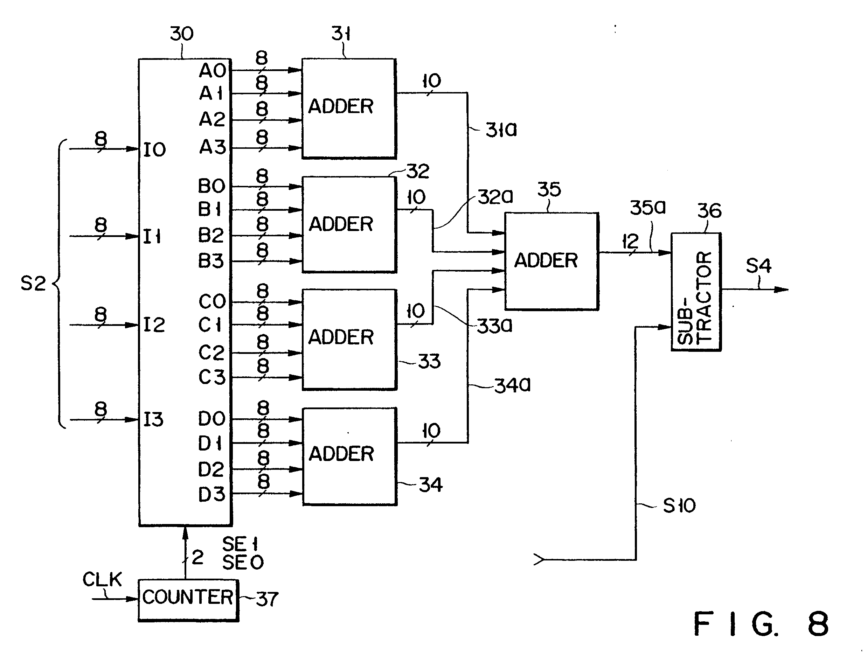

The mean value calculation circuit 4 will be described with reference to a block diagram of Fig. 8.

Arrangements and functions of a selector 30 and a counter 37 are the same as those in the maximum/minimum value detection circuit 11, and a detailed description thereof will be omitted.

In the mean value calculation circuit 4 of Fig. 8, the selector 20 outputs the image data S2 supplied to the inputs I3 to I0 to the output ports A3 to A0, B3 to B0, C3 to C0, or D3 to D0 in accordance with the selection signals SE0 and SE1 generated by the counter 37. In the 16 pixels shown in Fig. 6, four pixels of the (j-1)th, jth, (j+1)th, and (j+2)th columns are output to adders 31, 32, 33, and 34, respectively.

The adder 31 adds the densities of the pixels of the (j-1)th column, the adder 32 adds the densities of the pixels of the jth column, the adder 33 adds the densities of the pixels of the (j+1)th column, and the adder 34 adds the densities of the pixels of the (j+2)th column. The sums from the adders 31, 32, 33, and 34 are supplied to an adder 35. Each of the adders 31, 32, 33, and 34 adds 8-bit data and outputs 10-bit data.

The adder 35 adds a density 31a of the (j-1)th column output from the adder 31, a density 32a of the jth column output from the adder 32, a maximum density 33a of the (j+1)th column output from the adder 33, and a density 34a of the (j+2)th column output from the adder 34 and outputs a total sum-of-density signal 35a. The adder 35 adds 10-bit data and outputs 12-bit data. The total sum-of-density signal 35a is supplied to a divider 36.

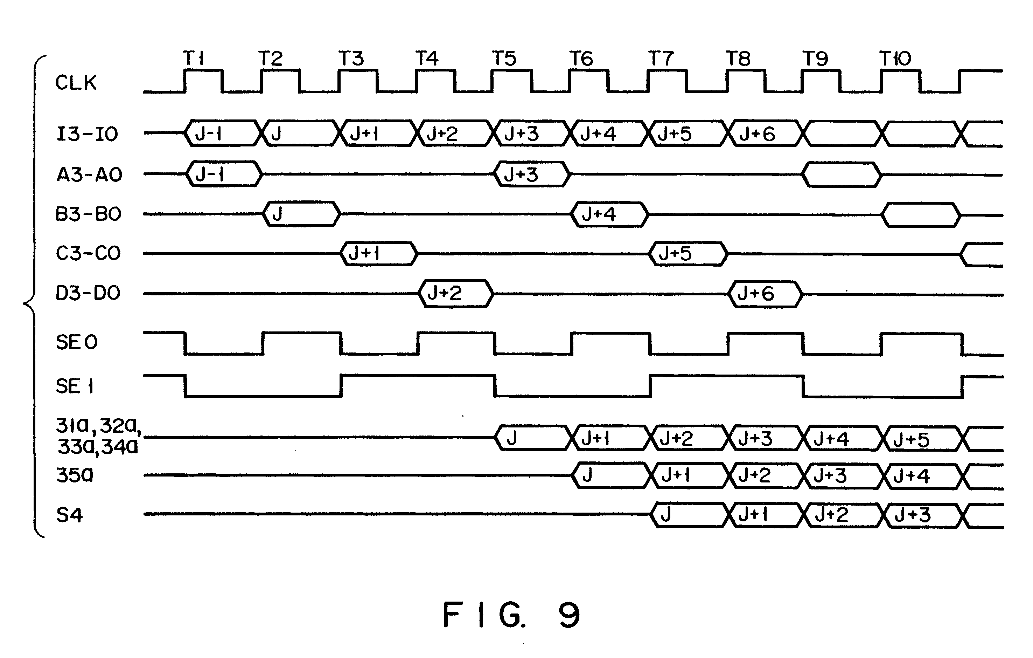

An operation of the mean value calculation circuit 4 will be described with reference to a timing chart of Fig. 9.

If a pixel subjected to binarization is given as a pixel of the ith row and the jth column indicated by the hatched portion of Fig. 6 in the same manner as in the calculation of the maximum density difference ΔDmax, a target window contains 16 pixels of the (i-1)th to (i+2)th rows and the (j-1)th to (j+2)th columns.

The mean value calculation circuit 4 is operated in response to the clock signal CLK synchronized with a read clock signal, as shown in Fig. 9. More specifically, during a clock pulse TI, the counter 37 is set in the initial state, and a selection signal SE1 = L level and a selection signal SE0 = L level are obtained to select the output ports A3 to A0 of the selector 20. At the same time, data of pixels of the (j-1)th column and the (i-1)th to (i+2)-th rows are supplied to the inputs I3 to I0 of the selector 20, respectively. Data of the pixels of the (j-1)th column are supplied to the adder 31, and the adder 31 outputs a sum-of-density signal 31a. During a clock pulse T2, the selection signal SE1 = L level and the selection signal SE0 = H level of the counter 27 are obtained to select the output ports B3 to B0. At the same time, data of the pixels of the jth column and the (i-1)th to (i+2)th rows of the window are supplied to the inputs I3 to I0 of the selector 20, respectively. Data of the pixels of the jth column are supplied to the adder 32, and the adder 32 outputs a sum-of-density signal 32a. During a clock pulse T3, the selection signal SE1 = H level and the selection signal SE0 = L level of the counter 27 are obtained to select the output ports C3 to C0. At the same time, data of pixels of the (j+1)th column and the (i-1)th to (i+2)th rows are supplied to the inputs I3 to I0 of the selector 20. Data of the pixels of the (j+1)th column are supplied to the adder 33, and the adder 33 outputs a sum-of-density signal 33a. During a clock pulse T4, the selection signal SE1 = H level and the selection signal SE0 = H level of the counter 27 are obtained to select the output ports D3 to D0. At the same time, data of the pixels of the (j+2)th column and the (i-1)th to (i+2)th rows are supplied to the inputs I3 to I0 of the selector 20. Data of the pixels of the (j+2)th column are supplied to the adder 34, and the adder 34 outputs a sum-of-density signal 34a. The sum-of-density signals 31a, 32a, 33a, and 34a of the (j-1)th, jth, (j+1)th, and (j+2)th columns of the target window are obtained and output.

During a clock pulse T5, the sum-of-density signals 31a, 32a, 33a, and 34a of the (j-1)th, jth, (j+1)th, and (j+2)th columns of the window are supplied to the adder 35. The adder 35 calculates a total sum of of the densities of the window from the sum-of-density signals 31a, 32a, 33a, and 34a of the respective columns and outputs the total sum-of-density signal 35a. During a clock pulse T6, the total sum-of-density signal 35a calculated by the adder 35 is supplied to a divider 36. The divider 36 divides the total sum-of-density signal 35a by a normalizing signal representing a value of the total number of pixels (= 16) and outputs the mean density signal S4 of the target window.

During a clock pulse T7, the mean density signal S4 is supplied to the decision circuit 5. At the same time, the decision circuit 5 receives the maximum density difference signal S3 output from the mean value calculation circuit 4. During a clock pulse T8, the estimation result is output to the selector circuit 6 as the discrimination signal S5.

The estimate circuit 5 discriminates a character section from a photograph section on the basis of the an estimation condition in accordance with the maximum density difference signal S3 and the mean density signal S4. The above discrimination is performed by using the ROM shown in Fig. 3, as previously described. That is, a 16-bit signal as a sum of the maximum density difference signal S3 and the mean density signal S4 is supplied to the ROM as address data, and the image signal is discriminated as a character or photograph section in accordance with a correlation between the maximum density difference signal S3 and the mean density signal S4. The discrimination signal S5 is output from the estimate circuit 5.

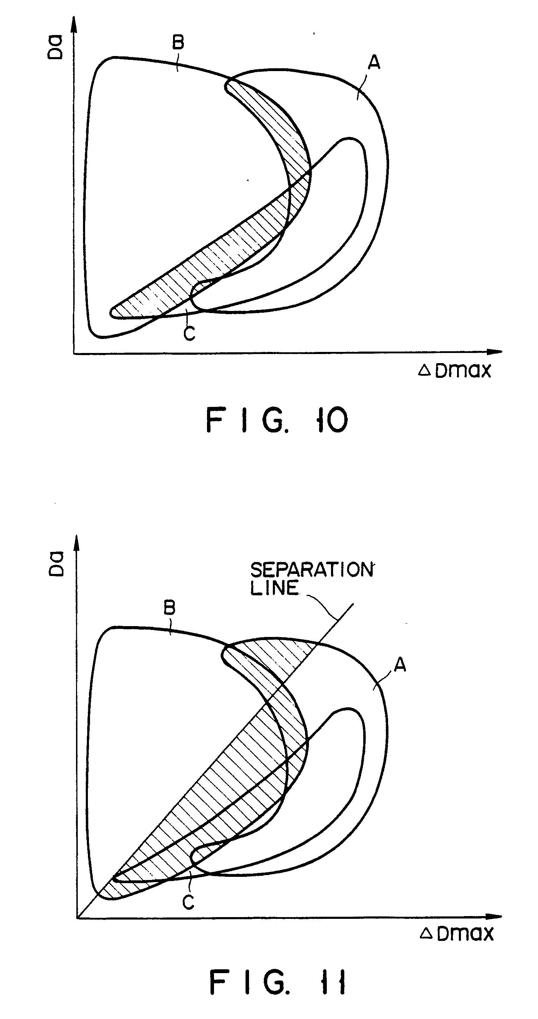

Fig. 10 shows the correlation between the maximum density difference $\Delta Dmax$ and the mean density Da obtained from various pieces of document image information. A section A is a high contrast character section, a section B is a photograph section, and a section C is a low contrast character section. Each characteristic is represented by 8-bit data. A hatched portion represents a discrimination error section but has a narrow distribution of occurrence probability (not shown), and image quality is rarely deteriorated. Therefore, even if the hatched portion is determined to be a character or photograph section, the hatched portion rarely adversely affects the image quality.

Fig. 11 shows a conventional discrimination method using the normalized maximum density difference as a characteristic. It is apparent from Fig. 11 that the area of the hatched portion representing discrimination errors is increased. A separation line has different gradients corresponding to different estimate threshold values. Even if all cases are assumed, the area of the discrimination errors is apparently increased as compared with the case of Fig. 10. Since an area where an occurrence probability (not shown) is large is defined as the area of the discrimination errors, the image quality is greatly deteriorated by the conventional method.

The decision circuit 5 receives the maximum density difference signal S3 representing the maximum density difference $\Delta Dmax$ and the mean density difference signal S4 representing the mean density Da. However, as shown in Fig. 10, decision data representing whether the input image signal represents a character or photograph section is created in accordance with a distribution pattern of the maximum density difference $\Delta Dmax$ and the mean density Da of the character and photograph sections obtained by the statistical values of the document images. The decision data is stored in a ROM in the decision circuit 5, and the decision data is read out from the ROM by address data having of the maximum density difference signal S3 and the mean density signal S4, thereby discriminating a character section from a photograph section. Therefore, a highly accurate estimation result can be obtained.

According to the present invention as has been described above, decision information prepared on the basis of statistical values of a plurality of characteristics from various pieces of document image information is prepared in the decision circuit 5, and characteristics are extracted from the first and second characteristic extracting circuits 3 and 4 on the basis of the obtained image information signal. The extracted characteristic signals are supplied to the decision circuit 5, and the decision signal S5 corresponding to the characteristic of the image is obtained from the decision circuit 5. The first or second threshold value Th1 or Th2 is selected on the basis of the discrimination signal S5. The selected threshold value is used as the threshold value Th for binary conversion. Therefore, the image information can be separated into sections corresponding to the characteristics of the image, and binary conversion suitable for the characteristic of the image in each section can be performed.

In the above embodiment, the size of the reference section (window) is not limited to the 4 (pixel) × 4 (pixel) window. The size of the window may be arbitrarily changed. In the above embodiment, decision is performed in units of pixels. However, discrimination may be performed in units of blocks each including of N (pixels) (N is an integer of 2 or more) × N (pixels). In this case, the processing speed can be increased, and a high-speed image processing apparatus can be obtained.

Difference values may be selected as the threshold value Bh in dynamic threshold processing. For example, Bh = Da may be obtained from the mean density value Da within a predetermined range. In addition, a threshold value may have an allowance $\alpha$ ($\alpha$ is a positive or negative value) with respect to each value. That is, Bh = Bh ± $\alpha$. When the threshold values has an allowance, a stable output image can be obtained even if image input conditions are changed by various conditions of the image processing apparatus. A dither threshold distribution need not be limited to a dot distributed distribution, but may be, e.g., a dot concentrated distribution. In addition, a nonlinear threshold distribution corresponding to output characteristics of an output unit may be obtained. Therefore, optimal gradation expressions can be obtained to cope with different types of printer, such as a laser printer, a thermal transfer printer, and an ink-jet printer.

According to the present invention, the characteristic values and decision threshold values are calculated on the basis of a value corresponding to the image signal read by the reader, i.e., corresponding to the reflectance of image information. However, this value may be converted into an image density (i.e., a logarithmic value of a reciprocal number of the reflectance), or decision may be performed on the basis of a signal converted in consideration of human visual characteristics.

According to the present invention, decision is performed with reference to a two-dimensional table using two different characteristics. However, decision may be performed by a multi-dimensional table using three or more characteristics. In addition, the number of quantization bits of each characteristic signal may be increased to improve decision precision.

Claims

1. An image data processing apparatus comprising:
means (1) for receiving an image signal corresponding to an image having a plurality of characteristic components;
means (3, 4) for extracting the plurality of characteristic components from the image signal received by said receiving means;
means (5) for outputting an estimate information corresponding to the characteristic components extracted by said extracting means;
means (7, 8) for generating a first threshold signal and a second threshold signal;
means (6) for selecting the first and second threshold signals generated by said threshold generating means in accordance with the estimate information output from said outputting means; and
means (9) for converting the image signal received by said receiving means into a binary data by means of the binary threshold signals selected by said selecting means.

2. An apparatus according to claim 1, characterized in that said receiving means receives the image signal having maximum and minimum levels respectively corresponding to maximum and minimum densities of the image, and said characteristic extracting means comprises means (11) for extracting the maximum and minimum levels of the image signal, means (12) for calculating a difference between the maximum and minimum levels and outputting maximum density difference data, means for (14) calculating a mean value of the image information signal and outputting mean density data, and means for outputting the maximum density difference data and the mean density data being output to said outputting means (5) as the characteristic components.

3. An apparatus according to claim 2, characterized in that the image signal has a plurality of pixel signals, and said maximum/minimum level extracting means comprises first detecting means (21 to 24) for sequentially extracting a plurality of signal groups, each including a predetermined number of pixel signals, from the image pixel signals, and for detecting the maximum and minimum levels from the predetermined numbers of pixel signals of the extracted signal groups, second detecting means (25, 26) for detecting a highest maximum level and a lowest minimum level from pluralities of maximum and minimum levels corresponding to the plurality of signal blocks, and means for calculating a difference between the highest maximum level and the lowest minimum level from said first and second detecting means and outputting the maximum density difference data.

4. An apparatus according to claim 3, characterized in that said first detecting means comprises a plurality of comparators (21 to 24) for respectively receiving signal blocks of the image signal, said comparators being arranged to compare image signals of the corresponding signal blocks to detect maximum levels.

5. An apparatus according to claim 3, characterized in that said second detecting means comprises a largest value comparator (26) for comparing the plurality of maximum levels and detecting the highest maximum level, and a smallest value comparator (26) for comparing the plurality of minimum levels and detecting the lowest minimum level.

6. An apparatus according to claim 2, characterized in that the image signal has the plurality of pixel signals, and said mean value calculating means (14) comprises first adding means for sequentially extracting a plurality of signal groups, each including a predetermined number of pixel signals, from the pixel signals, and adding the predetermined numbers of pixel signals of the extracted signal groups, second adding means for adding a plurality of sum values obtained from said first adding means and corresponding to the plurality of signal blocks, and means for dividing a sum value from said second adding means by a total number of the pixel signals and outputting the mean density data.

7. An apparatus according to claim 6, wherein said first adding means comprises a plurality of adders for respectively receiving signal blocks of the image signal, said adders being arranged to add pixel signals of the corresponding signal blocks and to output a sum value.

8. An apparatus according to claim 2, characterized in that said outputting means comprises memory means (5) for storing estimate information determined by a correlation between the maximum density difference and the mean density of the image, the estimate information being read out from said memory means by using values corresponding to the maximum density difference data and the mean density data as address information.

9. An apparatus according to claim 1, wherein said receiving means comprises means (1) for receiving an image signal having the characteristic components corresponding to character and photograph sections, and said outputting means comprises means (5) for outputting estimate information corresponding to the character and photograph sections.

10. An apparatus according to claim 9, characterized in that the character section has a high contrast character section and a low contrast character section, and said outputting means comprises means (5) for estimating the high and low contrast character sections.

11. An image processing apparatus comprising:
means (1) for receiving an image signal corresponding to character and photograph regions, the image signal including characteristic components corresponding to the character and photograph regions;
means (3, 4) for extracting the characteristic components from the image signal received by said receiving means;
means (5) for outputting an estimate information corresponding to the characteristic components extracted by the extracting means;
means (7, 8) for generating a first threshold signal and a second threshold signal;
means (6) for selecting the first and second threshold signals generated by said threshold generating means; and
means (9) for converting the image signal received by said receiving means into a binary data by means of the binary threshold signals selected by said selecting means.

12. An apparatus according to claim 11, characterized in that the character region has a high contrast character region and a low contrast character section, and said outputting means comprises means (5) for storing estimate information corresponding to the high and low contrast character regions and estimating the high and low contrast character regions.

13. An image processing apparatus comprising:
means (1) for receiving an image signal including a plurality of characteristic components corresponding to character and photograph;
means (3, 4) for extracting the plurality of characteristic components from the image signal received by said receiving means;
means (7, 8) for outputting an estimate information corresponding to the character components extracted by said characteristic extracting means;
means for generating first and second threshold signals;
means (6) for selecting the first and second threshold signals in accordance with the estimate information; and
binarizing means (9) for converting the image signal received by said receiving means into binary data in accordance with the threshold signal selected by said selecting means.

F I G. 1

EP 0 385 421 A2

F I G. 2

EP 0 385 421 A2

S3

MAXIMUM
DENSITY
DIFFERENCE
SIGNAL

A0
A1
A2
A3
A4
A5
A6
A7

R
O
M

5

S5
ESTIMATE
SIGNAL

MEAN
DENSITY
SIGNAL

A8
A9
A10
A11
A12
A13
A14
A15

S4

## F I G. 3

| 1 | 9 | 3 | 11 |
|----|----|----|----|
| 13 | 5 | 15 | 7 |
| 4 | 12 | 2 | 10 |
| 16 | 8 | 14 | 6 |

## F I G. 4

F I G. 5

EP 0 385 421 A2

FIG. 6

FIG. 7

F I G. 8

EP 0 385 421 A2

F I G. 9

EP 0 385 421 A2

F I G. 10

F I G. 11

| A | | B | C |
|---|---|---|---|

(HIGH CONTRAST CHARACTER REGION)  (LOW CONTRAST CHARACTER REGION)

A

C

D

B

( PHOTOGRAPH REGION )

F I G. 12

F I G. 13

255

128

0

IMAGE SIGNAL LEVEL

POSITION

ΔDmax

ΔDmax

ΔDmax

I

I

I